# EUROPÄISCHE PATENTSCHRIFT

(11) **EP 1 655 686 B1**
(45) Veröffentlichungstag und Bekanntmachung des Hinweises auf die Patenterteilung: **04.05.2011**
(21) Anmeldenummer: 05022321.3
(22) Anmeldetag: 13.10.2005
(51) Int. Cl.: G06K 7/00, H04B 1/38

(54) **Kontaktvorrichtung für eine Chipkarte, insbesondere für eine SIM- oder USIM-Karte**
Contact arrangement for a chip card, in particular a SIM or USIM card.
Moyen de contact pour carte à puce, en particulier pour une carte de type SIM ou USIM

(30) Priorität: 08.11.2004 DE 102004054150
(43) Veröffentlichungstag der Anmeldung: 10.05.2006
(73) Patentinhaber: Lumberg Connect GmbH, 58579 Schalksmühle (DE)
(72) Erfinder: Richter, Michael, 58579 Schalksmühle (DE); Bohn, Jürgen, 58511 Lüdenscheid (DE)
(74) Vertreter: Ostriga, Sonnet, Wirths & Roche

(56) Entgegenhaltungen:
- EP-A- 0 915 430
- EP-A- 1 028 538
- WO-A-98/13784
- DE-A1- 10 137 486

## Beschreibung

Die Erfindung betrifft eine Kontaktiervorrichtung für eine Chipkarte, insbesondere für eine SIM-Karte, nach dem Oberbegriff des unabhängigen Anspruchs 1.

Derartige Kontaktiervorrichtungen, in der Umgangssprache und auch in der Patentliteratur häufig unzutreffend mit "Chipkarten-Leser", "SIM-Card-Reader" od. dgl. bezeichnet, dienen zur Halterung und Bereitstellung der elektrischen Kontaktierung der Kontakte einer Chip- oder SIM-Karte (SIM = "**S**ubscriber **I**dentity **M**odule") mit Leiterbahnen eines Schaltungsträgers wie insbesondere einer Leiterplatte, die in einem elektronischen Gerät, z.B. einem Mobiltelefon, untergebracht ist.

Aus WO 98/13784 A ist eine abdeckungslose Kontaktiervorrichtung bekannt, deren Kontaktträgergehäuse Zungen zur Halterung einer Chipkarte ausbilden.

Aus EP 1 028 538 A2 ist eine Kontaktiervorrichtung mit Schwenkdeckel Bekannt. Der Schwenkdeckel aus der Kontaktträgerebene bogenförmig ausgestellt, so dass beim Schließen des Deckels eine die Chipkarte an die Kontakte des Kontaktträgers andrückende Kraft erzeugt wird.

Aus EP 955 598 A2 ist eine Gattungsgemäße Kontaktiervorrichtung mit einer Abdeckung aus Kunststoff bekannt. Der Frontrandbereich dieser Abdeckung ist rückstellelastisch mit einem Griffausschnitt ausgebildet. Beim Einführen einer Chipkarte wird der Frontrandbereich ausgelenkt.

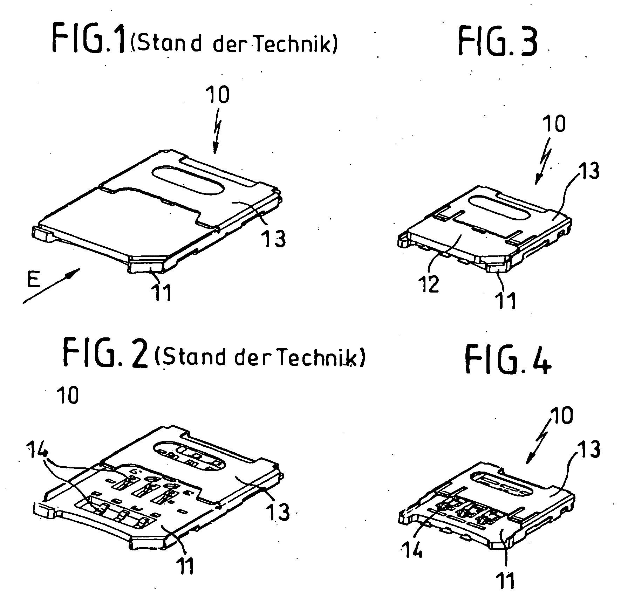

Eine weitere Kontaktiervorrichtung solcher Art ist durch druckschriftlich nicht belegbare Vorbenutzung bekannt geworden und im wesentlichen in den Fig. 1 und 2 der beiliegenden Zeichnung dargestellt. Darin ist eine Kontaktiervorrichtung für herkömmliche SIM-Karten 12 für Mobiltelefone in ihrer Gesamtheit mit 10 bezeichnet. Sie umfasst einen aus Kunststoff bestehenden Kontaktträger 11, in dem Kontakte 14 zur elektrisch leitenden Verbindung der nicht dargestellten Kontaktfelder der Chipkarte 12 mit Leiterbahnen des Gerätes eingebettet sind, sowie eine fest mit dem Kontaktträger 11 verbundene Abdeckung 13 aus dünnem Metallblech.

Die Breite der Kontaktiervorrichtung 10 ist minimal größer als die der Chipkarte 12. Die herkömmliche Kontaktiervorrichtung entspricht den Fig. 1 und 2 verwendeten Chipkarten mit den Abmessungen 25 x 15 mm. Um diese in die Kontaktiervorrichtung 10 einsetzen zu können, ist die Länge der Abdeckung 13 wesentlich geringer als die des Kontaktträgers 11 und der Chipkarte 12. Man führt die Chipkarte 12 in Einsteckrichtung E schräg in den Spalt ein, der zwischen der Abdeckung 13 und dem Kontaktträger 11 vorhanden ist und senkt sie nach dem Einstecken auf die Grundfläche des Kontaktträgers 11 ab. Um diesen Vorgang einfach ausführen zu können und entsprechend auch die Entnahme der Chipkarte 12, ist eine gewisse Flexibilität der Chipkarte 12 erforderlich.

Im Zuge der insbesondere mit der UMTS-Technik einhergehenden weiteren Miniaturisierung wird es künftig Chip-Karten erheblich kleinerer Abmessungen geben. ETSI (European Telecommunications Standards Institute) hat SIM-Karten der Dimension 25 x15 mm als sog. "dritten Formfaktor" zugelassen, die vornehmlich in UMTS-Geräten eingesetzt werden sollen. Diese neue Karte wird auch als USIM oder UICC (UICC = **U**MTS **I**ntegrated **C**ircuit **C**ard) bezeichnet.

Entsprechend der Tatsache, dass die neue USIM Chipkarte nur so lang und deutlich schmaler ist als die alte SIM-Karte sind die Kontaktiervorrichtungen diesen kleineren Chipkarten anzupassen, wobei das besondere Problem darin besteht, dass diese Chipkarten erheblich biegesteifer sind und es praktisch nicht möglich ist, ihre (nicht oder nicht in hinreichendem Maß vorhandene Flexibilität) im Sinne eines einfachen Einsteck- und Entnahmevorganges in die bzw. aus der Kontaktiervorrichtung nutzen zu können.

Hier setzt die Erfindung ein. Ihr liegt die Aufgabe zugrunde, eine Kontaktiervorrichtung der als bekannt vorausgesetzten Art insbesondere im Hinblick auf den Einsatz der USIMs bzw. UICCs einfach und geschickt auszugestalten.

Die Erfindung löst diese Aufgabe mit den Merkmalen des unabhängigen Anspruchs 1.

Das Prinzip der Erfindung besteht somit im wesentlichen darin, den erschwerten Verhältnissen beim Einstecken besonders kleiner Chipkarten in die Kontaktiervorrichtung durch eine gezielt nachgiebige Gestaltung der fest mit dem Kontaktträger verbundenen Abdeckung Rechnung zu tragen, und zwar ohne auf aufwendigere Kontaktiervorrichtungen mit Schwenk- oder Schiebedeckel zurückgreifen zu müssen. Mit der erfindungsgemäßen Lösung des zugrunde liegenden Problems ist eine besondere Schonung der Chipkarten verbunden, so dass sich die neue Kontaktiervorrichtung schon aus diesem Grunde auch für den Einsatz der bisher üblichen Chipkarten mit Vorteil eignet: Die Chipkarte muss beim Einsetzen in die und beim Herausnehmen aus der Kontaktiervorrichtung praktisch nicht mehr gebogen werden, vielmehr passt sich die Kontaktiervorrichtung nunmehr den von der Chipkarte auf sie ausgeübten Kräften flexibelelastisch an.

Gemäß einer bevorzugten Ausführungsform ist die Blattfeder mittels eines Stanzschnitts aus dem Blech der Abdeckung freigeschnitten und bleibt nach Art eines einseitig eingespannten Biegebalkens an der Abdeckung angebunden.

Des weiteren kann/können der/die verbleibenden Abschnitt/e des Frontrandes der Abdeckung gegenüber der wenigstens einen federelastischen Zunge längenreduziert zurückversetzt angeordnet sein.

Zusätzlich kann die frontrandlich der Abdeckung einwärts ausgebogenen Leitzunge zur Führung des voreilenden Chipkartenrandes eine Leitfläche ausbilden.

Sodann hat es sich als vorteilhaft erwiesen, wenn die wenigstens eine Federzunge sowie die Leitzunge sickenartige Formungen aufweisen, deren zur Chipkarte weisenden konvexen Seiten Leitflächen ausbilden.

Eine besonders bevorzugte Ausführungsform ist dadurch gekennzeichnet, dass die Abdeckung etwa mittig eine Zunge und etwa längsrandnah jeweils eine Federzunge aufweist.

Im übrigen wird die Erfindung nachfolgend unter Bezugnahme auf in den beiliegenden Zeichnungen dargestellte Ausführungsbeispiele näher erläutert. Es zeigen:
- Fig. 1: eine perspektivische Aufsicht auf eine herkömmliche Kontaktiervorrichtung mit eingesetzter Standard-SIM-Karte entsprechend dem Stand der Technik,
- Fig. 2: eine perspektivische Draufsicht auf die bekannte Einrichtung nach Fig. 1, jedoch ohne SIM-Karte,
- Fig. 3: eine Fig. 1 entsprechende Darstellung einer erfindungsgemä- ßen Kontaktiervorrichtung mit eingesetzter USIM oder UICC,
- Fig. 4: die Kontaktiervorrichtung der Fig. 3 ohne UICC,
- Fig. 5: eine Fig. 4 entsprechende Darstellung in vergrößertem Maß- stab,
- Fig. 6: eine perspektivische Unteransicht unter die Kontaktiervorrich- tung der Fig. 5,
- Fig. 7: eine Darstellung der Kontaktiervorrichtung der Fig. 5 mit eingesetzter Chipkarte,
- Fig. 8: eine Unteransicht unter die Kontaktiervorrichtung der Fig. 6 mit Blick auf die Lötseite,
- Fig. 9: eine Darstellung entsprechend Fig. 5 einer Kontaktiervorrich- tung mit abgewandeltem Kontaktträger,
- Fig. 10: die Kontaktiervorrichtung der Fig. 9 in perspektivischer Ansicht von unten,
- Fig. 11: eine Darstellung der Kontaktiervorrichtung der Fig. 9 mit eingesetzter Chipkarte, und
- Fig. 12: eine Unteransicht auf die Lötseite der Kontaktiervorrichtung der Fig. 11.

Ein unmittelbarer quantitativer Vergleich der eine Ausführung der neuen Kontaktiervorrichtung 10 zeigenden Fig. 3 und 4 mit denen des Standes der Technik nach den Fig. 1 und 2 zeigt die deutliche Verkleinerung der Bauform. Dabei ist zu berücksichtigen, dass die neue kleine Chipkarte 12 eben noch so lang ist (15 mm) wie die herkömmliche Chipkarte 12 breit. Sie ist daher praktisch nicht mehr flexibel und erschwert dadurch das Einführen in wie auch die Entnahme aus einer Kontaktiervorrichtung 10 der bisherigen Bauform, wie die Fig. 1 und 2 sie zeigen.

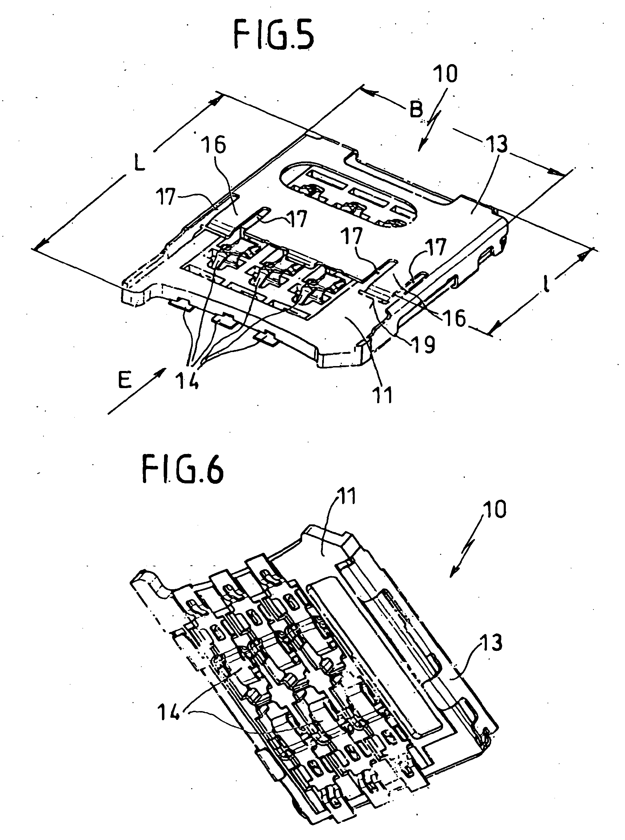

Entsprechend Fig. 5 weist der Kontaktträger 11 der Kontaktiervorrichtung 10 eine Länge L sowie eine Breite B auf, die jeweils nur unwesentlich größer sind als die Längen- und Breitenabmessungen der damit verwendeten Chipkarte. Die Abdeckung 13 weist im wesentlichen die gleiche Breite B, aber eine deutlich geringere Länge I auf, als der Kontaktträger 11. Demzufolge befindet sich im vorderen Bereich des Kontaktträgers 11 eine abdeckungsfreie Zone, die zum Einsetzen einer Chipkarte 12 zur Verfügung steht.

Weist der Kontaktträger 11 entsprechend Fig. 5 keine Endanschläge zur rückwärtigen Lagefixierung der eingesetzten Chipkarte auf, könnte sie im Prinzip ebenenparallel zum Kontaktträger 11 in Einsteckrichtung E in den Kontaktträger eingeschoben werden. Dies verbietet sich aber meist aufgrund des dazu im Gerät nicht vorhandenen Freiraums. Deshalb wird eine Chipkarte in der Regel schräg von oben eingeführt, wozu es aber erforderlich ist, dass die Chipkarte eine gewisse Flexibilität aufweist und daher in die Vorrichtung "eingebogen" werden kann.

Da Chipkarten neuerer Bauart mit extrem kleinen Abmessungen von 15 x 12 mm eine solche Flexibilität nicht mehr besitzen, ist entsprechend der Erfindung mindestens ein Bereich des Frontrandes 15 der Abdeckung 13 aus deren Grundebene heraus nach oben elastisch auslenkbar gestaltet.

Beim dargestellten Ausführungsbeispiel sind hierzu zwei Abschnitte des Frontrandbereichs 15 der Abdeckung 13 als federelastische Zungen 16 ausgebildet. Diese Zungen 16 sind aus dem Blech der Abdeckung 13 selbst herausgearbeitet, und zwar beim Ausführungsbeispiel durch jeweils zwei Freischnitte 17.

Es ist nun leicht verständlich, dass auch eine nicht flexible Chipkarte leicht und schonend in die Kontaktiervorrichtung 10 eingeführt werden kann, wobei sie die federelastischen Zungen 16 bezüglich Fig. 5 nach oben auslenkt. Da diese federelastischen Zungen 16 die Chipkarte führen und nach deren endgültigem Einsatz in die Kontaktiervorrichtung 10 auch federelastisch gegen den Kontaktträger 11 bzw. die Kontakte 14 halten, kann der übrige, bezüglich Fig. 5 mittige Bereich zwischen den elastischen Federzungen 16 gegenüber den Federzungen auch noch weiter zurückversetzt sein. Das bedeutet, dass die Breite b der Abdeckung 13 aufgrund des Vorhandenseins der federnden Zungen 16 noch geringer sein kann als es ansonsten womöglich erforderlich wäre.

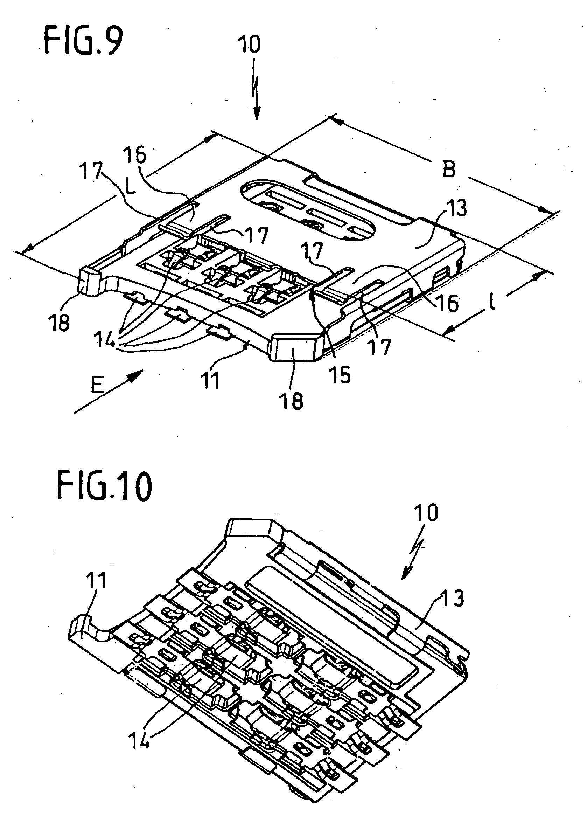

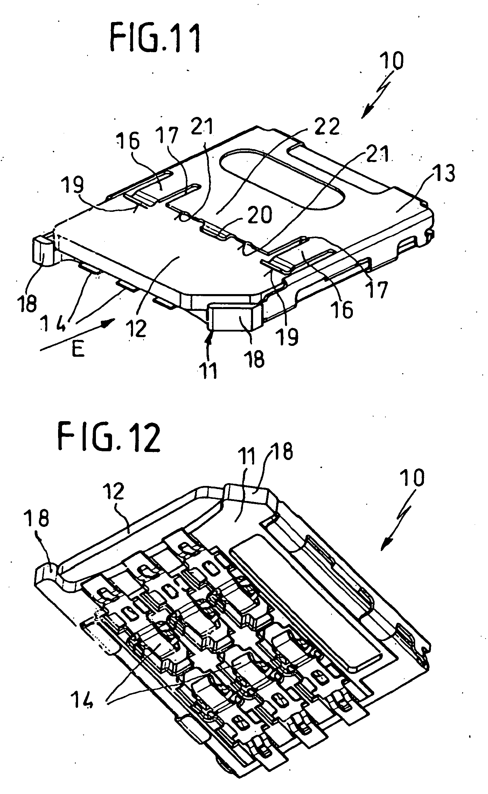

Die besondere Bedeutung der elastisch auslenkbaren Gestaltung wenigstens eines Abschnitts des Frontrandbereichs 15 der Abdeckung 13 wird aus den Fig. 9 und 11 besonders deutlich. Diese Fig. zeigen im Unterschied zu den übrigen Darstellungen einen abgewandelten Kontaktträger 11. Dieser weist hochgezogene Randabschnitte 18 auf, die, wie es insbesondere Fig. 11 veranschaulicht, als rückwärtige Anschläge zur Lagefixierung der eingesetzten Chipkarte 12 dienen. Das bedeutet aber auch, dass die Chipkarte 12 über diese erhabenen Anschläge 18 hinüber gehoben oder gezogen werden muss, je nachdem ob sie in die Kontaktiervorrichtung 10 eingesetzt oder ihr entnommen wird. Auch bei dieser Ausführungsform ist eine Flexibilität der Chipkarte 12 nicht erforderlich, da diese von dem federnd nachgiebigen Randbereich der Abdeckung 13 zur Verfügung gestellt wird.

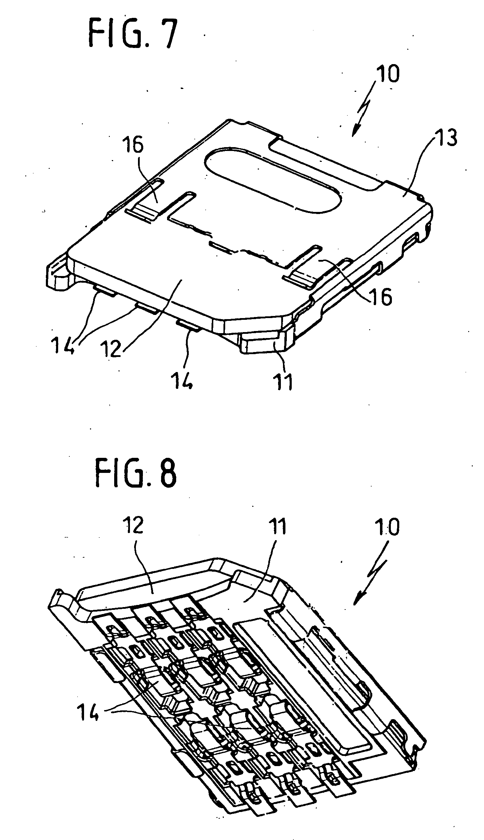

Wie insbesondere die Fig. 7, 9 und 11 des weiteren zeigen, sind die freien Enden der federelastischen Zungen 16 sickenartig verformt, wobei die Sicken mit ihrer konvexen Außenfläche 19 gegen die Oberseite des Kontaktträgers 11 bzw. der Chipkarte 12 weisen und somit sanfte Leitflächen bilden, so dass die Federzungen 16 zugleich auch als Leitzungen fungieren.

Eine weitere Art von Leitzunge 20 befindet sich etwa mittig des Frontrandbereichs der Abdeckung 13. Diese Leitzunge ist hinsichtlich ihrer sickenartigen und konvexen Ausgestaltung ähnlich wie die freien Enden der federnden Zungen 16 ausgebildet. Sie verhindert, dass die Chipkarte 12 beim Einstecken hart gegen die restlichen Randkantenbereiche 21 trifft und dadurch am Einschieben behindert oder gar beschädigt werden könnte.

Es ist bei den dargestellten Ausführungsbeispielen nicht unbedingt erforderlich, dass auch der mittige, die Leitzunge 20 aufweisende Randbereich der Abdeckung 13 federnd ausgebildet ist. Gleichwohl könnte der in Fig. 11 mit 22 bezeichnete relativ breite Abschnitt zwischen den beiden mittigen Einschnitten 17 selbst auch als Blattfeder ausgebildet sein.

## Patentansprüche

1. Kontaktiervorrichtung (10) für eine Chipkarte (12), insbesondere für eine SIM-Karte eines elektronischen Geräts wie z.B. Chipkartenlesegerät, Mobiltelefon od.dgl., mit einem Kontaktträger (11) und darin aufgenommenen Kontaktelementen (14) zur Verbindung der Kontakte der Chipkarte (12) mit Leiterbahnen eines in dem Gerät enthaltenen Schaltungsträgers wie Leiterplatte, und mit einer am Kontaktträger (11) fixierten blechförmigen Abdeckung (13), deren entgegen der Einsteckrichtung (E) der Chipkarte (12) weisender Frontrand gegenüber dem ebenfalls in Einsteckrichtung (E) der Chipkarte (12) weisenden Frontrand des Kontaktträgers (11) zurückversetzt angeordnet ist, wobei mindestens ein Frontrandbereich der Abdeckung (13) aus deren Grundebene heraus elastisch auslenkbar gestaltet ist, wobei zwei Abschnitte des Frontrandbereichs (15) der Abdeckung (13) durch jeweils zwei Freischnitte (17) als federnd elastische Zungen (16) herausgearbeitet sind und wobei die federelastischen Zungen (16) beim Einführen einer Chipkarte (12) ausgelenkt werden und nach Einsatz der Chipkarte (12) in die Kontaktiervorrichtung (10) diese federelastisch gegen den Kontaktträger (11) bzw. die Kontakte (14) halten, **dadurch gekennzeichnet, dass** der Frontrand der Abdeckung (13) etwa mittig eine Leitzunge (20) aufweist.

2. Kontaktiervorrichtung nach Anspruch 1, **dadurch gekennzeichnet, dass** die federelastischen Zungen (16) nach Art einer Blattfeder ausgebildet ist.

3. Kontaktiervorrichtung nach Anspruch 2, **dadurch gekennzeichnet, dass** jede Blattfeder mittels Stanzschnitten (17) aus dem Blech der Abdeckung (13) freigeschnitten ist und nach Art eines einseitig eingespannten Biegebalkens an der Abdeckung (13) angebunden bleibt.

4. Kontaktiervorrichtung nach einem der Ansprüche 1 bis 3, **dadurch gekennzeichnet, dass** der/die verbleibenden Abschnitte (21) des Frontrandes der Abdeckung (13) gegenüber den federelastischen Zungen (16) längenreduziert zurückversetzt angeordnet sind.

5. Kontaktiervorrichtung nach einem der vorhergehenden Ansprüche, **dadurch gekennzeichnet, dass** der Frontrand der Abdeckung (13) wenigstens eine Leitfläche aufweist zur Führung des voreilenden Randes der Chipkante unter die Abdeckung (13).

6. Kontaktiervorrichtung nach Anspruch 5, **dadurch gekennzeichnet, dass** die Leitfläche an einer frontrandlich der Abdeckung (13) einwärts gebogenen Leitzunge (20) ausgebildet ist.

7. Kontaktiervorrichtung nach einem der vorhergehenden Ansprüche, **dadurch gekennzeichnet, dass** die Federzungen (16) sowie die Leitzunge (20) sickenartige Formungen aufweisen, deren zur Chipkarte weisenden konvexen Seiten Leitflächen (19) ausbilden.

8. Kontaktiervorrichtung nach einem der vorhergehenden Ansprüche, **dadurch gekennzeichnet, dass** die Abdeckung (13) längsrandnah jeweils eine Federzunge (16) aufweist.

## Claims

1. Contacting device (10) for a chip card (12), in particular for a SIM card of an electronic device such as a chip card reader, mobile telephone or similar, with a contact carrier (11) and contact elements (14) received in it to connect the contacts of the chip card (12) to tracks of a circuit carrier, such as a printed circuit board, which is contained in the device, and with a sheet metal cover (13) which is fixed on the contact carrier (11), and the front edge of which, facing towards the plugging-in direction (E) of the chip card (12), is arranged set back relative to the front edge of the contact carrier (11), which also faces in the plugging-in direction (E) of the chip card (12), at least one front edge region of the cover (13) being in such a form that it can be deflected elastically out of its datum plane, two sections of the front edge region (15) of the cover (13) each being worked from it by two free punches (17) as springily elastic tongues (16), and the springily elastic tongues (16) being deflected when a chip card (12) is introduced, and after the insertion of the chip card (12) into the contacting device (10), holding the latter springily elastically against the contact carrier (11) and/or the contacts (14), **characterized in that** the front edge of the cover (13) has, approximately centrally, a leading tongue (20).

2. Contacting device according to Claim 1, **characterized in that** the springily elastic tongues (16) are in the form of a leaf spring.

3. Contacting device according to Claim 2, **characterized in that** each leaf spring is punched free from the sheet metal of the cover (13) by means of punched cuts (17), and remains connected to the cover (13) like a flexional beam which is fixed on one side.

4. Contacting device according to any one of Claims 1 to 3, **characterized in that** the remaining section(s) of the front edge of the cover (13) are arranged set back relative to the springily elastic tongues (16) and reduced in length.

5. Contacting device according to any one of the preceding claims, **characterized in that** the front edge of the cover (13) has at least one leading surface, to guide the leading edge of the chip card under the cover (13).

6. Contacting device according to Claim 5, **characterized in that** the leading surface is formed on a leading tongue (20), which is bent inward on the front edge of the cover (13).

7. Contacting device according to any one of the preceding claims, **characterized in that** the springy tongues (16) and the leading tongue (20) have bead-like formations, the convex sides of which, facing the chip card, form leading surfaces (19).

8. Contacting device according to any one of the preceding claims, **characterized in that** the cover (13) has a springy tongue (16) near each longitudinal edge.

## Revendications

1. Dispositif de mise en contact (10) pour une carte à puce (12), en particulier pour une carte de type SIM d'un appareil électronique tel que, par exemple, un lecteur de carte à puce, un téléphone mobile ou analogue, avec un support de contact (11) et des éléments de contact (14) y étant logés, pour assurer la liaison des contacts de la carte à puce (12) avec des pistes conductrices d'un support de circuit contenu dans l'appareil, tel qu'une carte à circuit imprimé, et avec un couvercle (13) en forme de tôle, fixé sur le support de contact (11), dont le bord avant, tourné à l'encontre du sens d'introduction (E) de la carte à circuit imprimé (12), est disposé en retrait par rapport au bord avant, également tourné dans le sens d'introduction (E) de la carte à puce (12), du support de contact (11), au moins une zone de bord avant du couvercle (13) étant configurée pour s'écarter élastiquement de son plan de base par un débattement, deux tronçons de la zone de bord avant (15) du couvercle (13) étant obtenus par usinage de découpage de chaque fois deux découpures (17), sous forme de languettes (16) ayant l'élasticité d'un ressort, et les languettes (16) ayant l'élasticité d'un ressort étant écartées lors de l'insertion d'une carte à puce (12) et, après insertion de la carte à puce (12) dans le dispositif de mise en contact (10), maintenant celui-ci élastiquement, à la manière d'un ressort, contre le support de contact (11) ou les contacts (14), **caractérisé en ce que** le bord avant du couvercle (13) présente à peu près centralement une languette de guidage (20).

2. Dispositif de mise en contact selon la revendication 1, **caractérisé en ce que** les languettes (16) ayant l'élasticité d'un ressort sont réalisées à la manière d'un ressort à lame.

3. Dispositif de mise en contact selon la revendication 2, **caractérisé en ce que** chaque ressort à lame est obtenu par découpage à partir de la tôle du couvercle (13), par un estampage (17), et reste attaché au couvercle (13) à la manière d'une poutre de flexion liée d'un côté.

4. Dispositif de mise en contact selon l'une des revendications 1 à 3, **caractérisé en ce que** le/les tronçon(s) (21) subsistant(s) du bord avant du couvercle (13) est/sont disposé(s) en retrait, accompagné(s) d'une réduction de longueur, par rapport aux languettes (16) ayant l'élasticité d'un ressort.

5. Dispositif de mise en contact selon l'une des revendications précédentes, **caractérisé en ce que** le bord avant du couvercle (13) présente au moins une surface de guidage, pour le guidage du bord, se présentant à l'avant, de l'arête de puce électronique sous le couvercle (13).

6. Dispositif de mise en contact selon la revendication 5, **caractérisé en ce que** la surface de guidage est réalisée sur une languette de guidage (20) pliée vers l'intérieur en bordure avant du couvercle (13).

7. Dispositif de mise en contact selon l'une des revendications précédentes, **caractérisé en ce que** les languettes élastiques (16), ainsi que la languette de guidage (20), présentent des conformations du genre de nervures, dont les faces convexes, tournées vers la carte à puce, constituent des surfaces de guidage (19).

8. Dispositif de mise en contact selon l'une des revendications précédentes, **caractérisé en ce que** le couvercle (13) présente, à proximité du bord longitudinal, chaque fois une languette élastique (16).
